**Europäisches Patentamt**

**European Patent Office**

**Office européen des brevets**

(11) Veröffentlichungsnummer: **0 190 554**
**B1**

(12) # EUROPÄISCHE PATENTSCHRIFT

(45) Veröffentlichungstag der Patentschrift:
**12.09.90**

(51) Int. Cl.⁵: **G06F 1/04**

(21) Anmeldenummer: **86100162.6**

(22) Anmeldetag: **08.01.86**

(54) Verfahren und Schaltungsanordnung zum Umschalten einer taktgesteuerten Einrichtung mit mehreren Betriebszuständen.

(30) Priorität: **05.02.85 DE 3503832**

(43) Veröffentlichungstag der Anmeldung:
**13.08.86 Patentblatt 86/33**

(45) Bekanntmachung des Hinweises auf die Patenterteilung:
**12.09.90 Patentblatt 90/37**

(84) Benannte Vertragsstaaten:
**AT CH DE FR GB IT LI NL SE**

(56) Entgegenhaltungen:
**US-A- 3 932 816**
**US-A- 4 229 699**

(73) Patentinhaber: **Siemens Aktiengesellschaft,**
**Wittelsbacherplatz 2, D-8000 München 2(DE)**

(72) Erfinder: **Spengler, Werner, Dr. rer. nat.,**
**Josef-Lutz-Weg 23, D-8000 München 70(DE)**

**Beschreibung**

Die Erfindung bezieht sich auf ein Verfahren zum Umschalten einer taktgesteuerten Einrichtung gemäß dem Oberbegriff des Hauptanspruches und auf eine Umschalteinrichtung zum Durchführen dieses Verfahrens.

Elektronische Steuerungen werden auf einer Vielzahl von Gebieten mit Erfolg eingesetzt, bei denen ein von außen in Form einer Impulsfolge zugeführter Takt den zeitlichen Ablauf der Steuerungsfunktion bestimmt. Vielfach werden bei solchen taktgesteuerten Einrichtungen unterschiedliche Betriebszustände definiert, denen dann jeweils auch unterschiedliche Taktsignalfolgen zugrundegelegt sein können. Dabei ist es denkbar, daß sich die individuell den Betriebszuständen zugeordneten Taktsignalfolgen nur in ihrer Phasenlage zueinander unterscheiden, jedoch die gleiche Impulsfolgefrequenz aufweisen. Es kann aber auch der Fall eintreten, daß die Vorgänge in den verschiedenen Betriebszuständen, von äußeren Randbedingungen vorgegeben, mit unterschiedlicher Geschwindigkeit ablaufen müssen und sich dann die individuellen Taktsignalfolgen sogar in ihrer Impulsfolgefrequenz unterscheiden.

Ohne Beschränkung sei hier auf einen praktischen Anwendungsfall als ein Beispiel für eine solche taktgesteuerte Einheit hingewiesen. Periphere Geräte der elektronischen Datenverarbeitung, insbesondere periphere Speichergeräte sind vielfach gruppenweise über eine zugeordnete Steuereinheit an ein datenverarbeitendes System angeschlossen. Diese Steuereinheit übernimmt die Aufgabe, die Funktion der angeschlossenen peripheren Speichergeräte zu überwachen, dabei Schreib-/Lesevorgänge auszulösen und die entsprechenden Daten vom bzw. zum datenverarbeitenden System in systemgerechter Form zu übertragen. Entsprechend bekannten Industriestandards für Plattenspeicherschnittstellen wird beispielsweise der Datenverkehr zwischen der Steuereinheit und einem zugeordneten Plattenspeichergerät dadurch synchronisiert, daß verschiedene Taktsignalfolgen vom Plattenspeichergerät zur Steuereinheit übertragen werden. Das kann z. B. beim Auslesen gespeicherter Daten ein Lesetaktsignal sein, während für alle anderen Vorgänge ein Referenztaktsignal verwendet wird, das von gelesenen Informationen abgeleitet wird, die auf der sogenannten Servooberfläche des Plattenspeichergerätes gespeichert sind.

Diese Takte steuern ein sequentielles Steuerwerk in der Steuereinheit, wobei sich das Problem ergibt, daß beim Übergang von einem auf einen anderen Betriebszustand, d. h. beim Umschalten von einer Taktsignalfolge auf die andere ein gewisser, von der jeweiligen Phasenlage der beteiligten Taktsignalfolgen abhängiger Schlupf auftritt. Die Tatsache als solche ist noch nicht kritisch, jedoch müssen dabei unvollständige Taktperioden insbesondere auch dann vermieden werden, wenn die Umschaltung - wie häufig - asynchron zu der gerade selektierten Taktsignalfolge ausgelöst wird. Anderenfalls wäre ein fehlerhaftes Arbeiten des sequentiellen Schaltnetzwerkes in der Steuereinheit die Folge, bei dem es zu Datenverlust oder Fehlsteuerungen kommen kann.

Für solche taktgesteuerten Einrichtungen mit mehreren, jeweils von einer individuellen Taktsignalfolge gesteuerten Betriebszuständen, die wiederum durch ein extern zugeführtes Auswahlsignal eingestellt werden, ist es daher notwendig, die Taktumschaltung unter Beachtung zeitlicher Randbedingungen durchzuführen, um einen fehlerlosen Übergang von einem Betriebszustand in den anderen zu sichern.

Aus US-A-3,932,816 ist eine Schaltungsanordnung zum Erzeugen individueller Taktsignalfolgen mit unterschiedlicher Frequenz zur Steuerung von entsprechenden Betriebszuständen bekannt, die durch zugeordnete Auswahlsignale angeschaltet werden. Dabei wird das Umschalten auf einen anderen Betriebszustand immer erst nach der Vollendung eines Taktzyklus der bisher selektierten Taktsignalfolge vorgenommen. Nach einer vorgegebenen, mehrere Taktzyklen umfassenden Wartezeit wird die nachfolgend anzuschaltende Taktsignalfolge mit dem Beginn eines neuen Taktsignalzyklus wirksam. Dazu sind einzelnen Taktgeneratoren individuell Verzögerungsnetzwerke mit fest vorgegebenen Verzögerungszeiten zugeordnet, die derart ausgelegt sind, daß die Wartezeiten in jedem Falle länger sind, als die Dauer mindestens einer Taktperiode der niederfrequentesten Taktsignalfolge. Damit ist in jedem Fall sichergestellt, daß die neu selektierte Taktsignalfolge erst zu einem Zeitpunkt wirksam geschaltet wird, wenn sie mit einem neuen Taktzyklus beginnt. Aus diesem Ansatz resultieren im Mittel relativ lange Umschaltverzögerungen.

Der Erfindung liegt daher die Aufgabe zugrunde, ein Verfahren der eingangs genannten Art zu schaffen, das einen möglichst schnellen, jedoch fehlerfreien Übergang von einem Betriebszustand in einen anderen auch dann ermöglicht, obwohl den einzelnen Betriebszuständen individuelle Taktsignalfolgen mit unterschiedlicher Phasenlage und/oder Taktsignalfrequenz zugeordnet sind und die Umschaltung asynchron zu diesen Taktsignalfolgen ausgelöst wird. Der Erfindung liegt weiterhin die Aufgabe zugrunde, eine Umschalteinrichtung zu schaffen, die nach einem solchen Verfahren arbeitet.

Die bezüglich des Verfahrens gestellte Aufgabe wird erfindungsgemäß bei einem Verfahren der eingangs genannten Art durch die im Kennzeichen des unabhängigen Anspruchs 1 beschriebenen Merkmale gelöst. Mit diesem Verfahren wird einerseits sichergestellt, daß der eigentliche Umschaltevorgang von einer bisher selektierten Taktsignalfolge auf eine andere jeweils nur dann stattfindet, wenn beide Taktsignale einen vorbestimmten Signalzustand, d. h. je nach Anwendungsfall Hoch- bzw. Niedrigpegel, einnehmen. Eine solche zeitliche Koinzidenz der Signalzustände kann im allgemeinen Fall wegen der verschiedenen möglichen Phasenlagen der Taktsignalfolgen zueinander nicht ohne weiteres vorausgesetzt werden, daher ist mit dem erfindungsgemäßen Verfahren andererseits eine Wartezeit geschaffen, die mit dem Abschluß einer Taktperiode der bisher selektierten Taktsignalfolge beginnt, jedoch nur bis zum Beginn einer Taktperiode der zu selektierenden Taktsignalfolge reicht und während der sich der Signalzustand der auf die gesteuerte Einrichtung durchgeschalteten Taktsignalfolge nicht ändert.

Daß sich ein solches Verfahren auf eine sehr einfache Weise mit einem geringen Aufwand an Schaltmittel auch realisieren läßt, ergibt sich aus den Merkmalen des unabhängigen Anspruchs 3. Dort ist eine Umschalteinrichtung beschrieben, die in ihrem Kern eine Folge von in ihren Schaltzuständen voneinander abhängigen Speichergliedern in Verbindung mit einem logischen Schaltnetzwerk enthält, wobei diese Speicherglieder sich selbst und das Schaltnetzwerk so steuern, daß ausgehend vom individuellen Betriebsfall die Umschaltung nicht unnötig verzögert, d. h. die eingeblendete Wartezeit entsprechend der gerade gegebenen unterschiedlichen Phasenlage der betroffenen Taktsignalfolgen minimisiert wird.

Damit ist es mit einem geringfügigen Schaltungsaufwand möglich, in einer taktgesteuerten Einrichtung den Übergang von einem Betriebszustand in einen anderen ohne Verlust eines für das Steuerwerk der taktgesteuerten Einrichtung signifikanten Taktsignalwechsels und ohne aufwendiges Wiedereinphasen der gesteuerten Einrichtung auf einen Takt mit geänderter Phasenlage und/oder Frequenz vorzunehmen. Der Umschaltevorgang kann dabei völlig asynchron ausgelöst werden und einschränkende Randbedingungen für die den verschiedenen Betriebszuständen jeweils zugeordneten Taktsignalfolgen hinsichtlich Phasenlage und/ oder Frequenz sind nicht gegeben. Das erfindungsgemäße Verfahren und die dazugehörige zur Durchführung des Verfahrens bestimmte Umschalteinrichtung sind daher sehr flexibel in ihrer Anwendung und können in Verbindung mit den unterschiedlichsten taktgesteuerten Einrichtungen Verwendung finden.

Ausführungsbeispiele der Erfindung werden im folgenden anhand der Zeichnung näher beschrieben, dabei zeigt

Fig. 1 ein Blockschaltbild einer Schaltungsanordnung zur Durchführung des erfindungsgemäßen Verfahrens,
Fig. 2 eine Reihe von Impulsdiagrammen zur Erläuterung der Funktionsweise der in Fig. 1 dargestellten Schaltungsanordnung,
Fig. 3 ein Blockschaltbild einer weiteren Ausführungsform und
Fig. 4 Impulsdiagramme zur Erläuterung der Funktion der in Fig. 3 dargestellten Schaltungsanordnung.

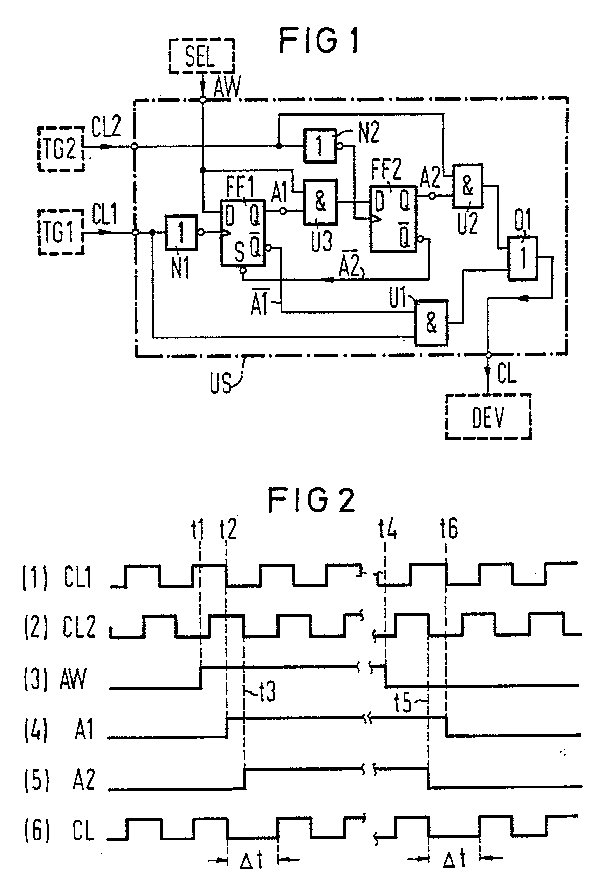

Im Blockschaltbild von Fig. 1 ist im wesentlichen eine Umschalteinrichtung US dargestellt, die eingangsseitig zwei Taktsignalfolgen CL1 bzw. CL2 empfängt und der außerdem ein statisches Auswahlsignal AW zugeführt wird. Mit diesem Auswahlsignal wird alternativ eine der Taktsignalfolgen CL1 bzw. CL2 selektiert und auf den Ausgang der Umschalteinrichtung US durchgeschaltet. Das entsprechende Ausgangstaktsignal ist mit CL bezeichnet. Der Vollständigkeit halber ist in dem Blockschaltbild von Fig. 1 schematisch angedeutet, daß die beiden Taktsignalfolgen CL1 und CL2 von jeweils einem Taktimulsgeber TG1 bzw. TG2 erzeugt werden und das Auswahlsignal AW von einem Selektor SEL abgegeben wird. Das Ausgangstaktsignal CL schließlich wird einer mit DEV bezeichneten gesteuerten Einrichtung zugeführt. Die entsprechenden Blöcke für die beiden Taktimpulsgeber TG1, TG2, den Selektor SEL und die gesteuerte Einrichtung DEV sind mit unterbrochenen Linien dargestellt, um anzudeuten, daß diese Einheiten keinen Teil der hier vorliegenden Erfindung darstellen, sie mögen in herkömmlicher Schaltungstechnik, dem jeweiligen Anwendungsfall entsprechend, aufgebaut sein und unterliegen insofern nur der einen Beschränkung, daß die entsprechenden Sende- bzw. Empfangssignale in bezug auf die Signalpegel kompatibel sind.

In der Umschalteinrichtung US wird jede der beiden Taktsignalfolgen CL1 bzw. CL2 jeweils einem ersten Eingang eines entsprechenden UND-Gliedes U1 bzw. U2 und parallel dazu jeweils einem entsprechenden Inverter N1 bzw. N2 zugeführt. Der erste Inverter gibt die erste Taktsignalfolge CL1 in invertierter Form an den Takteingang eines ersten D-Flipflops FF1 ab, das an seinem D-Eingang das Auswahlsignal AW empfängt. Dieses Flipflop gibt an seinem normalen Ausgang ein mit A1 bezeichnetes Ausgangssignal ab, das einem Eingang eines dritten UND-Gliedes U3 zugeführt wird. Dieses UND-Glied empfängt an seinem zweiten Eingang direkt das Auswahlsignal AW und gibt ein Ausgangssignal an ein zweites D-Flipflop FF2 ab, dessen Takteingang an den Ausgang des zweiten Inverters N2 angeschlossen ist. Der normale Ausgang dieses zweiten Flipflops führt ein mit A2 bezeichnetes Ausgangssignal, das dem zweiten Eingang des zweiten UND-Gliedes U2 zugeführt ist. Der invertierte Ausgang des zweiten D-Flipflops FF2 ist auf einen Setzeingang S des ersten D-Flipflops FF1 invertiert zurückgeführt. Die Ausgangsstufe der Umschalteinrichtung US bildet schließlich ein ODER-Glied O1, das eingangsseitig mit den Ausgängen der beiden UND-Glieder U1 und U2 verbunden ist und dessen Ausgang das Ausgangstaktsignal CL führt. Die beschriebene Schaltungsanordnung ist aus kommerziell erhältlichen Elementen aufgebaut und im Detail dann auch auf deren Eigenschaften ausgerichtet. So sind z. B. die verwendeten D-Flipflops FF1 bzw. FF2 durch die positive Flanke eines Taktes getriggert und deshalb hier die Inverter N1 bzw. N2 verwendet. Ähnliches gilt für die Ausbildung und damit die Beschaltung von Setz- bzw. Rücksetzeingängen, wie noch ersichtlich wird.

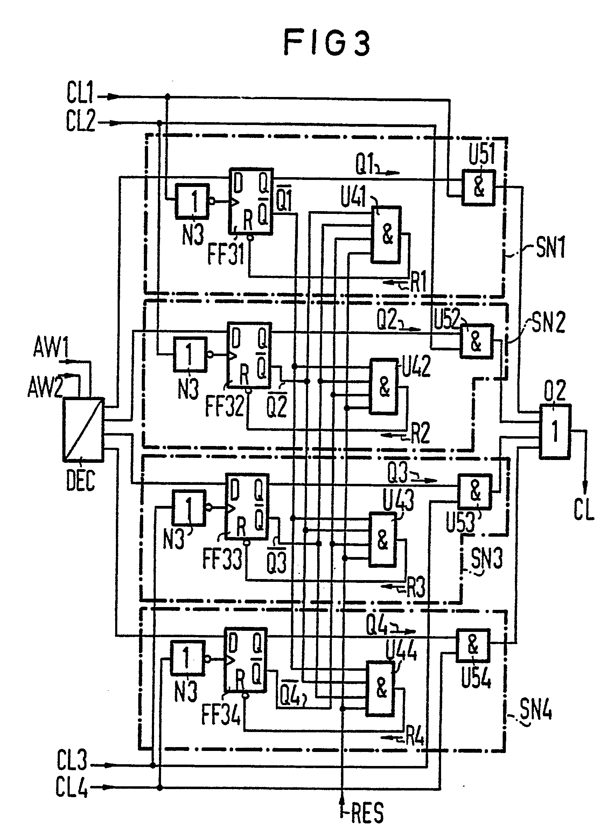

Die Wirkungsweise dieser Umschalteinrichtung US wird im folgenden anhand der in Fig. 2 dargestellten Impulsdiagramme im einzelnen erläutert. In diesem Ausführungsbeispiel ist festgelegt, daß ein Niedrigpegel des Auswahlsignales AW, wie in der dritten Zeile von Fig. 2 dargestellt, die erste Taktsignalfolge CL1 bzw. sein hoher Pegel die zweite Taktsignalfolge CL2 selektiert. Damit ist gemäß der Darstellung von Fig. 2 angenommen, daß zunächst die erste Taktsignalfolge CL1 ausgewählt und auf den Ausgang der Umschalteinrichtung US durchgeschaltet ist. Dabei wird das erste D-Flipflop FF1 über das statische Auswahlsignal AW im rückgesetzten Zustand gehalten und damit das erste UND-Glied U1 in die Lage versetzt, die erste Taktsignalfolge CL1 auf das ODER-Glied O1 durchzuschalten.

Zu einem Zeitpunkt t1 ändert sich der Zustand des Auswahlsignales AW und leitet damit die Auswahl der zweiten Taktsignalfolge CL2 ein. Die Lage des Zeitpunktes t1 ist in bezug auf die Phasenlage der beiden Taktsignalfolgen CL1 bzw. CL2 völlig beliebig. Damit werden das erste D-Flipflop FF1 und das dritte UND-Glied U3 vorbereitet, wobei das Flipflop jedoch erst durch die nächste negative Taktflanke der ersten Taktsignalfolge CL1 umgeschaltet wird. Zu diesem Zeitpunkt t2 nimmt damit das in der vierten Zeile von Fig. 2 dargestellte Ausgangssignal A1 des ersten D-Flipflops FF1 einen hohen Signalpegel an, zugleich wird das erste UND-Glied U1 gesperrt und somit das Ausgangstaktsignal CL auf Niedrigpegel gehalten.

In diesem Zustand ist das dritte UND-Glied U3 durchgeschaltet und bereitet damit das zweite D-Flipflop FF2 vor. Wenn nun zum Zeitpunkt t3 die nächste negative Taktflanke der zweiten Taktsignalfolge CL2 auftritt, wird auch das zweite D-Flipflop FF2 gesetzt. Dies bedeutet einerseits, wie in Zeile 5 von Fig. 2 dargestellt, einen Zustandswechsel seines Ausgangssignales A2, der das zweite UND-Glied U2 aktiviert, so daß nunmehr die zweite Taktsignalfolge CL2 auf den Ausgang der Umschalteinrichtung US durchgeschaltet wird. Andererseits wird nun das erste D-Flipflop FF1 über den an das zweite D-Flipflop angeschlossenen Setzeingang S gehalten.

Dieser Schaltzustand der Umschalteinrichtung US bleibt nun solange unverändert, solange das Auswahlsignal AW seinen Signalzustand nicht wechselt. Aus der Darstellung des in Zeile 6 der Fig. 2 gezeigten Ausgangstaktsignals CL ist zu entnehmen, daß ein Umschalten von der ersten Taktsignalfolge CL1 auf die zweite Taktsignalfolge CL2 immer nur bei Niedrigpegel beider Taktsignalfolgen erfolgen kann. Damit ist sichergestellt, daß durch den Umschaltvorgang, ungeachtet der gegenseitigen Phasenlage der beiden Taktimpulsfolgen und der dazu asynchronen Zustandswechsel des Auswahlsignales AW, niemals eine unvollständige Taktperiode auftreten kann, die in der taktgesteuerten Einrichtung DEV undefinierte Zustände und damit möglicherweise eine fehlerhafte Funktion hervorrufen könnte.

Fig. 2 illustriert weiterhin den Ablauf bei der Umschaltung in der umgekehrten Richtung, die zu einem Zeitpunkt t4 mit dem Rücksetzen des statischen Auswahlsignales AW eingeleitet wird. Zu diesem Zeitpunkt wird das dritte UND-Glied U3 gesperrt. Wenn dann zum Zeitpunkt t5 die folgende negative Taktflanke bei der zweiten, bisher selektierten Taktsignalfolge CL2 auftritt, wird das zweite D-Flipflop FF2 rückgesetzt und mit dem Niedrigpegel des entsprechenden Ausgangssignales A2 das zweite UND-Glied U2 gesperrt. Erst zu diesem Zeitpunkt wird das erste D-Flipflop FF1 freigegeben, so daß es damit zum Zeitpunkt t6, wenn die nächste negative Taktflanke der nun wieder selektierten ersten Taktsignalfolge CL1 auftritt, umgeschaltet wird. Damit wird das Ausgangssignal A1 dieses Flipflops rückgesetzt und zugleich wieder das erste UND-Glied U1 freigegeben, so daß die erste Taktsignalfolge CL1, wiederum beginnend mit Niedrigpegel, auf den Ausgang der Umschalteinrichtung US durchgeschaltet wird.

In dem beschriebenen Ausführungsbeispiel ist davon ausgegangen, daß die beiden Taktsignalfolgen CL1 bzw. CL2 zwar die gleiche Impulsfolgefrequenz, jedoch unterschiedliche Phasenlagen zueinander aufweisen. Anhand der Impulsdiagramme von Fig. 2 läßt sich nachvollziehen, daß die jeweilige Phasenlage der beiden Taktsignalfolgen zueinander unterschiedliche Verzögerungen in der Umschaltung bedingt. Aufgrund der Ausbildung der Schaltungsanordnung ergeben sich zwei Grenzwerte für die in Zeile 6 von Fig. 2 mit Δt bezeichnete Länge für den Niedrigpegel des Ausgangstaktsignals CL. Es läßt sich leicht überlegen, daß mit geringer werdender Voreilung der ersten Taktsignalfolge CL1 gegenüber der zweiten Taktsignalfolge CL2 der zeitliche Abstand (t3-t2) immer mehr zusammenschrumpft, jedoch den Wert 0 wegen der Laufzeit in den Schaltkreisen nicht erreichen kann. Der untere Grenzwert für Δt beträgt daher mindestens eine halbe Taktperiode bei 50 %igem Tastverhältnis. Eine solche geringfügige Voreilung der ersten Taktsignalfolge zugrundegelegt, ergibt sich analog, daß in diesem Fall der Zeitabstand (t6-t5) nahezu eine volle Taktperiode betragen muß und damit der obere Grenzwert für Δt bei 1,5 Taktperioden liegt.

Die beschriebene Schaltungsanordnung könnte selbstverständlich auch Taktsignalfolgen mit unterschiedlicher Folgefrequenz verarbeiten. Bezeichnet man dann die Taktperiode der Taktsignalfolge höherer Frequenz beispielsweise mit T1 und die Taktperiode der Taktsignalfolge niedrigerer Frequenz mit T2, dann beträgt der untere Grenzwert für Δt mindestens 1/2 T1 und der entsprechende obere Grenzwert höchstens (1/2 T1 + T2). Diese Betrachtungen lassen sich sinngemäß auch auf Taktimpulsfolgen mit anderem Tastverhältnis erweitern.

Wie in dem Blockschaltbild von Fig. 3 dargestellt, ist das vorstehend beschriebene Verfahren und Schaltungskonzept auch auf eine Mehrzahl von voneinander unabhängigen Taktimpulsfolgen und deren selektive Auswahl erweiterbar. Der Umschalteinrichtung gemäß Fig. 3 sind, beispielhaft für n Taktsignalfolgen CLn, vier Taktsignalfolgen CL1 bis CL4 zugrundegelegt. Damit sind allgemein n, hier im Ausführungsbeispiel vier verschiedene Arbeitszustände der Umschalteinrichtung vorgegeben, die jeweils durch eine von n bzw. vier möglichen Signalkombinationen von Auswahlbits AW1, AW2 definiert sind. Diese Auswahlbits werden einem Decoder DEC, hier für eine 4-aus-2-Auswahl ausgebildet, angeboten.

Die Decoderausgänge sind individuell jeweils mit einem von mehreren gleichartig aufgebauten Schaltnetzwerken SN1 bis SN4 (allgemein SNn) verbunden. Jedes dieser Netzwerke besitzt ein D-Flipflop FF3n, an dessen Dateneingang D der zugeordnete Ausgang des Decoders DEC angeschlossen ist. Der Takteingang des D-Flipflops FF3n ist über einen Inverter N3 an eine Signalleitung angeschlossen, die die zugeordnete Eingangstaktsignalfolge CLn, hier CL1, CL2, CL3 bzw. CL4 führt. Jedes der D-Flipflops FF3n besitzt einen Rücksetzeingang R, der an den Ausgang eines UND-Gliedes U4n angeschlossen ist. Jedes UND-Glied U4n besitzt vier Eingänge. Einer dieser Eingänge ist an eine gemeinsame Steuerleitung, die ein Rücksetzsignal RES führt, angeschlossen. Die drei übrigen Eingänge jedes der UND-Glieder U4n sind so geschaltet, daß das entsprechende UND-Glied U41 bis U44 in jedem dieser Schaltnetzwerke SN1 bis SN4 mit allen inversen Ausgängen Q̄ der D-Flipflops FF3n der übrigen Schaltnetzwerke verbunden ist. Jedes Schaltnetzwerk enthält darüber hinaus ein weiteres UND-Glied U5n, das eingangsseitig sowohl mit dem normalen Ausgang Q des D-Flipflops FF3n dieses Schaltnetzwerkes SNn als auch mit der entsprechenden Signalleitung verbunden ist, die die zugeordnete Eingangstaktimpulsfolge CLn führt. Die Ausgänge aller UND-Glieder U5n sind gemeinsam über ein ODER-Glied O2 an den Ausgang der Umschalteinrichtung angeschlossen, der die Ausgangstaktsignalfolge CL abgibt.

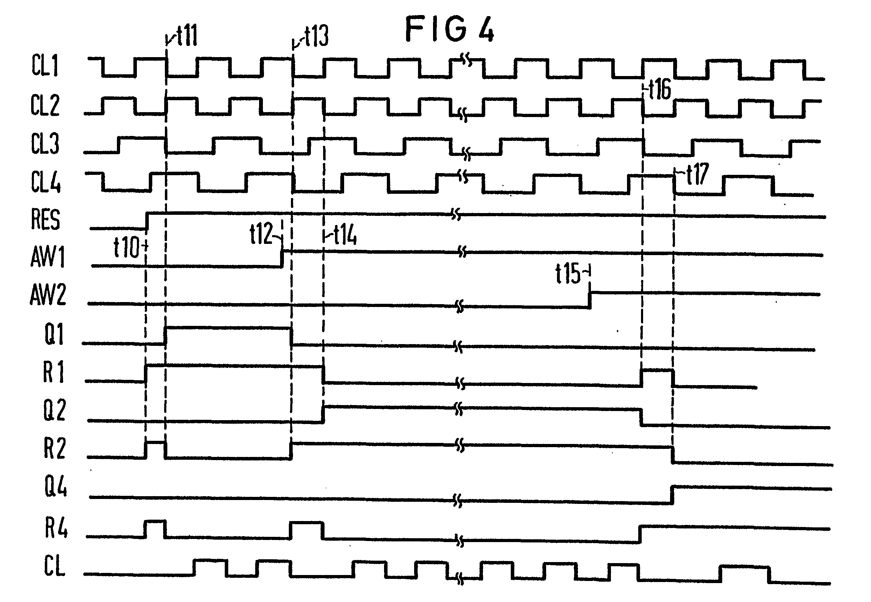

Die Wirkungsweise dieser zweiten, in Fig. 3 dargestellten Ausführungsform ist im wesentlichen analog zu der bereits anhand der Fig. 1 und 2 im einzelnen erläuterten ersten Ausführungsform, sie kann daher zusammengefaßt anhand der in Fig. 4 dargestellten Impulsdiagramme erläutert werden. Die ersten vier Zeilen von Fig. 4 illustrieren Beispiele für vier voneinander unabhängige Eingangstaktsignalfolgen CL1, CL2, CL3 und CL4. Die fünfte Zeile zeigt das Rücksetzsignal RES, das zunächst einen Niedrigpegel aufweisen soll. Dadurch sind zunächst alle UND-Glieder U4n der Schaltnetzwerke gesperrt und somit die D-Flipflops FF3n zurückgesetzt. Die Ausgangssignale der UND-Glieder U4n sind mit R1, R2, R3 bzw. R4 bezeichnet und - soweit zum Verständnis erforderlich - in den Impulsdiagrammen von Fig. 4 wiedergegeben. In diesem Zustand geben damit alle D-Flipflops FF3n an ihren normalen Ausgängen Q Ausgangssignale Q1, Q2, Q3 bzw. Q4 mit Niedrigpegel ab. Die weiteren UND-Glieder U5n sind damit gesperrt, so daß auch das Ausgangstaktsignal CL auf Niedrigpegel liegt.

Zum Zeitpunkt t10 möge das Rücksetzsignal RES seinen Signalzustand ändern. Dabei sollen die Auswahlbits AW1 und AW2 beide nicht gesetzt sein. Diese Signalkombination möge die erste Eingangstaktsignalfolge CL1 selektieren, was bedeutet, daß am Dateneingang D des D-Flipflops FF31 des ersten Schaltnetzwerks SN1 ein hoher Signalpegel ansteht. Mit der zum Zeitpunkt t11 abfallenden Flanke der ersten Taktsignalfolge CL1 wird das D-Flipflop FF31 dieses Schaltnetzwerks gesetzt und mit seinem Ausgangssignal Q1 die Eingangstaktsignalfolge CL1 am zugeordneten UND-Glied U51 auf den Ausgang durchgeschaltet. Dieser Ablauf entspricht der Wirkungsweise der anhand der Fig. 1 und 2 erläuterten Ausführungsform mit dem einen Unterschied, daß hier das zusätzlich verwendete Rücksetzsignal RES die Umschalteinrichtung, z. B. nach dem Einschalten von Betriebsspannung, definiert anlaufen läßt.

Zum Zeitpunkt t12 möge sich die Signalkombination der beiden Auswahlbits AW1 und AW2 derart ändern, daß nunmehr beispielsweise die zweite Eingangstaktsignalfolge CL2 selektiert wird. Mit der nächstfolgenden abfallenden Flanke der bisher ausgewählten ersten Eingangstaktsignalfolge CL1, d. h. zum Zeitpunkt t13 wird das bisher gesetzte D-Flipflop FF31 zurückgesetzt und das zugeordnete UND-Glied U51 gesperrt. Mit dem Rücksetzen des bisher ausgewählten D-Flipflops FF31 werden die Rücksetzeingänge R aller übrigen Flipflops freigeschaltet. Das der nunmehr selektierten Eingangstaktsignalfolge CL2 zugeordnete D-Flipflop FF32 im zweiten Schaltnetzwerk SN2 ist über seinen Dateneingang D vorbereitet und wird mit der nächstfolgenden abfallenden Flanke der nun selektierten Eingangstaktsignalfolge CL2 zum Zeitpunkt t14 gesetzt. Damit werden die UND-Glieder U4n aller übrigen Schaltnetzwerke gesperrt und die zugeordneten D-Flipflops FF3n zurückgesetzt, während zugleich über das im selektierten Schaltnetzwerk SN2 angeordnete weitere UND-Glied U52 die zweite Eingangstaktsignalfolge CL2 auf den Ausgang durchgeschaltet wird.

Dieser Zustand bleibt nun aufrechterhalten, bis wiederum eine Änderung der Signalkombination bei den Auswahlbits AW1 und AW2 auftritt. Zu einem Zeitpunkt t15 mögen beide Auswahlbits AW1, AW2 gesetzt werden. Daraufhin wird zum Zeitpunkt t16, d. h. mit Auftreten der nächsten abfallenden Flanke der bisher selektierten zweiten Eingangstaktsignalfolge CL2 das zugeordnete D-Flipflop FF32 zurückgesetzt, wie an der Zustandsänderung des Ausgangssignals Q2 erkennbar ist. Mit der angenommenen Auswahlsignalkombination sei nunmehr die vierte Taktsignalfolge CL4 selektiert, deren nächste abfallende Flanke zum Zeitpunkt t17 das vorbereitete D-Flipflop FF34 im Schaltnetzwerk SN4 setzt. Die vierte Eingangstaktsignalfolge CL4 ist damit selektiert und erscheint am Ausgang der Umschalteinrichtung als Ausgangstakt CL. Mit dem Setzen des D-Flipflops FF34 im vierten Schaltnetzwerk SN4 wird zugleich wieder ein Rücksetzimpuls RES an alle übrigen D-Flipflops FF3n abgegeben, wie in der Darstellung von Fig. 4 an den Signalen R1 bzw. R2 zu erkennen ist. Diese Umschaltung setzt sich in beliebiger Form, abhängig von Zustandsänderungen der Auswahlbits AW1 bzw. AW2, fort.

Damit ist auch bei der zweiten Ausführungsform gewährleistet, daß bei Änderung der Auswahl zunächst immer nur das gesetzte D-Flipflop FF3n seinen Zustand ändert und damit die zuvor ausgewählte Eingangstaktsignalfolge CLn zurücknimmt. Erst dann kann eines der anderen D-Flipflops einen neuen Zustand annehmen. Auch hier ist durch die Wahl der abfallenden Flanke der verschiedenen Eingangstaktsignalfolgen als auslösende Größe sichergestellt, daß Umschaltungen in Bezug auf die Ausgangstaktsignalfolge CL immer nur mit Einsetzen des Niedrigpegels der ausgewählten Eingangstaktsignalfolge stattfinden kann. Deshalb ergeben sich auch bei dieser zweiten Ausführungsform die für die erste Ausführungsform erläuterten Beziehungen für die Verzögerung in der Umschaltphase.

**Patentansprüche**

1. Verfahren zum verzögerten Umschalten einer taktgesteuerten Einrichtung (DEV) mit mindestens zwei, durch jeweils eine individuelle Taktsignalfolge (CL1, CL2) gesteuerten Betriebszuständen, die durch ein statisches Auswahlsignal (Aw) selektiert werden, wobei nach einer die Umschaltung auslösenden Zustandsänderung des Auswahlsignals (AW) zunächst die eine bisher selektierte Taktsignalfolge (z. B. CL1) bis zum Auftreten ihrer nächsten Impulsflanke einer vorbestimmten Richtung zur taktgesteuerten Einrichtung (DEV) unverändert durchgeschaltet bleibt, danach der damit aufgetretene Taktsignalzustand, unabhängig von möglichen Zustandsänderungen der bisher selektierten Taktsignalfolge (CL1) gehalten wird, dadurch gekennzeichnet, daß dieser Taktsignalzustand jedoch nur solange aufrechterhalten wird, bis die nächste Impulsflanke derselben vorbestimmten Richtung nun bei der dem zu aktivierenden Betriebszustand zugeordneten Taktsignalfolge (z. B. CL2) auftritt, und daß dadurch ausgelöst diese andere Taktsignalfolge (CL2) unmittelbar auf die taktgesteuerte Einrichtung (DEV) durchgeschaltet wird.

2. Verfahren nach Anspruch 1, wobei zum Durchschalten einer neu selektierten Taktsignalfolge (z. B. CL1) auf die taktgesteuerte Einrichtung (DEV) der auslösende Zustand des Auswahlsignales (AW) in einen ersten Speicher (FF1 bzw. FF31), gesteuert durch die Impulsflanke der vorbestimmten Richtung der neu selektierten Taktsignalfolge, übernommen wird, sowie in Abhängigkeit von dem damit erreichten Zustand des ersten Speichers ein Steuersignal ($\overline{A1}$ bzw. Q1) erzeugt wird, das eine die neu selektierte Taktsignalfolge empfangende Schalteinrichtung (U1 bzw. U51) aktiviert und bei einer erneuten Änderung des Auswahlsignales zunächst der Speicher bei Auftreten der Impulsflanke der vorbestimmten Richtung der bisher selektierten Taktsignalfolge umgeladen und damit die bisher aktivierte Schalteinrichtung deaktiviert wird, dadurch gekennzeichnet, daß zugleich mit dem Umladen des Speichers der bisher aktivierten Schalteinrichtung ein weiterer, der nunmehr selektierten Taktsignalfolge (z. B. CL2) zugeordneter Speicher (FF2 bzw. FF32) vorbereitet und beim Auftreten der Impulsflanke der vorbestimmten Richtung der nunmehr selektierten Taktsignalfolge geladen wird und damit eine weitere Schalteinrichtung (U2 bzw. U52) aktiviert wird, die in analoger Weise die nunmehr selektierte Taktsignalfolge auf die taktgesteuerte Einrichtung (DEV) durchschaltet.

3. Umschalteinrichtung zum Umschalten einer taktgesteuerten Einrichtung (DEV) mit mindestens zwei, durch jeweils eine individuelle Taktsignalfolge (z. B. CL1) gesteuerten und durch ein statisches Auswahlsignal (z. B. AW1) selektierten Betriebszuständen, bei der für jeden dieser Betriebszustände jeweils ein Schaltnetzwerk (z. B. N1, FF1, U1 bzw. SNn) mit einem durch die zugeordnete Taktsignalfolge (z. B. CL1) gesteuerten und den Zustand des Auswahlsignales speichernden Speicherglied (FF1 bzw. FF3n) und einer daran angeschlossenen Schalteinrichtung (U1 bzw. U5n) zum selektiven Durchschalten der zugeordneten Taktsignalfolge und außerdem ein ODER-Glied (O1 bzw. O2) vorgesehen sind, über das die Schaltnetzwerke an die taktgesteuerte Einrichtung (DEV) angeschlossen sind, dadurch gekennzeichnet, daß in den Schaltnetzwerken jeweils weitere Schaltmittel (z. B. U3 bzw. U4n) vorgesehen sind, die als Haltestufen derart ausgebildet sind, daß sie bei einem Umschaltvorgang eine durch das Auftreten der nächsten Impulsflanke einer vorbestimmten Richtung der nunmehr selektierten Taktsignalfolge (CL1 bzw. CL2) gesteuerte Übernahme des nunmehr aktivierten Auswahlsignales in das Speicherglied nur solange verhindern, bis das Speicherglied des bisher selektierten Schaltnetzwerkes deaktiviert ist.

4. Umschalteinrichtung nach Anspruch 3 zum selektiven Durchschalten einer von zwei Taktsignalfolgen (CL1 bzw. CL2) aufgrund eines statischen, jeweils einen von zwei Zuständen einnehmenden Auswahlsignales (AW), wobei die Speicherglieder (FF1 bzw. FF2) als D-Flipflops ausgebildet sind, deren Takteingängen je eine der beiden Taktsignalfolgen (CL1 bzw. CL2) zugeführt ist und die Schalteinrichtungen als UND-Glieder (U1 bzw. U2) ausgebildet sind, deren einem Eingang die jeweils zugeordnete Taktsignalefolge (CL1 bzw. CL2) zugeführt ist, dadurch gekennzeichnet, daß der inverse Ausgang des ersten Speichergliedes (FF1) bzw. der normale Ausgang des zweiten Speichergliedes (FF2) mit dem zweiten Eingang der entsprechenden Schalteinrichtung (U1 bzw. U2) verbunden ist, daß die als Haltestufen ausgebildeten Schaltmittel ein weiteres, an den normalen Ausgang des ersten Speichergliedes (FF1) angeschlossenes und ausgangsseitig mit dem Dateneingang des zweiten Speichergliedes (FF2) verbundenes UND-Glied (U3) sowie eine Verbindungsleitung umfassen, über die das erste Speicherglied (FF1) durch eines der Ausgangssignale ($\overline{A2}$) des zweiten Speichergliedes (FF2) im gesetzten Zustand gehalten wird, solange das zweite Speicherglied selbst gesetzt ist, und daß das Auswahlsignal (AW) parallel dem Dateneingang des ersten Speichergliedes (FF1) und einem weiteren Eingang des weiteren UND-Gliedes (U3) zugeführt ist.

5. Umschalteinrichtung nach Anspruch 4, dadurch gekennzeichnet, daß die beiden Taktsignalfolgen (CL1 bzw. CL2) jeweils über einen Inverter (N1 bzw. N2) an die Takteingänge des ersten bzw. zweiten, mit positiver Taktflanke getriggerten Speichergliedes (FF1 bzw. FF2) angeschlossen sind und damit die Umschalteinrichtung (US) selektiv auf eine Auswertung der abfallenden Taktsignalflanken abgestimmt ist.

6. Umschalteinrichtung nach Anspruch 3 zum selektiven Durchschalten einer Mehrzahl von Taktsignalfolgen (CLn) aufgrund eines decodierten Auswahlsignals, wobei die jeweils gleichartig aufgebauten, einer der Taktsignalfolgen (CLn) zugeordneten Schaltnetzwerke (SNn) als Speicherglied (FF3n) ein D-Flipflop aufweisen, und die Schalteinrichtung zum Durchschalten der zugeordneten Taktsignalfolge als UND-Glied (U5n) ausgebildet ist, dadurch gekennzeichnet, daß die weiterhin in jedem Schaltnetzwerk als Haltestufe vorgesehenen Schaltmittel als ein weiteres UND-Glied (U4n) ausgebildet ist, das eingangsseitig parallel mit den inversen Ausgängen ($\overline{Q}$) der Speicherglieder aller anderen Schaltnetzwerke verbunden ist und dessen Ausgang an einen Rücksetzeingang (R) des Speichergliedes im Schaltnetzwerk angeschlossen ist.

7. Umschalteinrichtung nach Anspruch 6, dadurch gekennzeichnet, daß jedes der weiteren UND-Glieder (U4n) einen weiteren Eingang aufweist, und diese weiteren Eingänge gemeinsam an eine Steuersignalleitung angeschlossen sind, über die der Umschalteinrichtung ein externes Rücksetzsignal (RES) zuführbar ist.

8. Umschalteinrichtung nach Anspruch 6 oder 7, dadurch gekennzeichnet, daß in jedem Schaltnetzwerk (SNn) ein Inverter (N3) vorgesehen ist, dem eingangsseitig die zugeordnete Taktsignalfolge (CLn) zugeführt ist und der ausgangsseitig an den Takteingang des entsprechenden Speichergliedes (FF3n) angeschlossen ist, das mit der positiven Flanke getriggert wird.

9. Umschalteinrichtung nach einem der Ansprüche 6 bis 8, gekennzeichnet durch einen n-aus-m-Decoder (DEC), dem eingangsseitig ein digitales Auswahlsignal (AW1, AW2) zugeführt ist und dessen Ausgänge jeweils mit einem der Schaltnetzwerke (SNn) verbunden sind.

**Claims**

1. Method for the delayed switching-over of a clocked device (DEV) having at least two operating states which are in each case controlled by an individual clock signal sequence (CL1, CL2) which are selected by a static selection signal (AW), in which method, after a state change of the selection signal (AW), triggering the switching-over, the one previously selected clock signal sequence (for example CL1) initially remains switched through on to the clocked device (DEV) until its next pulse edge of a predetermined direction occurs, thereafter the clock signal state which occurred in this manner is held independently of any state changes of the previously selected clock signal sequence (CL1), characterized in that this clock signal state is only maintained however until the next pulse edge of the same predetermined direction then occurs with the clock signal sequence (for example CL2) associated with the operating state to be activated, and in that, triggered by this, this other clock signal sequence (CL2) is switched through directly to the clocked device (DEV).

2. Method according to Claim 1, in which, for the purpose of switching through a newly selected clock signal sequence (for example CL1) to the clocked device (DEV), the triggering state of the selection signal (AW) is transferred into a first store (FF1 or FF31), controlled by the pulse edge of the predetermined direction of the newly selected clock signal sequence, and, in dependence on the state thus achieved in the first store, a control signal ($\overline{A1}$ or Q1) is generated which activates a switching device (U1 or U51) receiving the newly selected clock signal sequence and during another change of the selection signal first the store is reloaded when the pulse edge of the predetermined direction of the previously selected clock signal sequence occurs and thus the previously activated switching device is deactivated, characterized in that, at the same time as the store of the previously activated switching device is reloaded, a further store (FF2 or FF32) associated with the clock signal sequence (for example CL2) now selected is prepared and loaded when the pulse edge of the predetermined direction of the clock signal sequence now selected occurs and thus a further switching device (U2 or U52) is activated which analogously switches the clock signal sequence now selected through to the clocked device (DEV).

3. Switching-over device for switching over a clocked device (DEV) with at least two operating states controlled by in each case one individual clock signal sequence (for example CL1) and selected by a static selection signal (for example AW1), in which device in each case a switching network (for example N1, FF1, U1 or SNn) with a storage element (FF1 or FF3n) controlled by the associated clock signal sequence (for example CL1) and storing the state of the selection signal and a switching device (U1 or U5n) connected thereto for selectively switching-through the associated clock signal sequence and also an OR element (O1 or O2) are provided for each of these operating states, via which OR element the switching networks are connected to the clocked device (DEV), characterized in that in the switching networks in each case further switching means (for example U3 or U4n) are provided which are constructed as hold stages in such a manner that they prevent a transfer, controlled by the occurrence of the next pulse edge of a previously determined direction of the clock signal sequence (CL1 or CL2) now selected, of the selection signal now activated into the storage element during a switching-over process for only as long as the storage element of the previously selected switching network is deactivated.

4. Switching-over device according to Claim 3 for selectively switching through one of two clock signal sequences (CL1 or CL2) on the basis of a static selection signal (AW) which in each case assumes one of two states, the storage elements (FF1 or FF2) being constructed as D-type flip-flops, the clock inputs of which are in each case fed with one of the two clock signal sequences (CL1 or CL2) and the switching devices being constructed as AND elements (U1 or U2), the one input of which is supplied with the in each case associated clock signal sequence (CL1 or CL2), characterized in that the inverse output of the first storage element (FF1) or, respectively, the normal output of the second storage element (FF2) is connected to the second input of the corresponding switching device (U1 or U2), in that the switching means constructed as hold stages comprise a further AND element (U3) which is connected to the normal output of the first storage element (FF1) and is connected at the output to the data input of the second storage element (FF2), and a connecting line via which the first storage element (FF1) is held in the set state by one of the output signals ($\overline{A2}$) of the second storage element (FF2) as long as the second storage element itself is set, and in that the selection signal (AW) is fed in parallel to the data input of the first storage element (FF1) and to a further input of the further AND element (U3).

5. Switching-over device according to Claim 4, characterized in that the two clock signal sequences (CL1 or CL2) are in each case connected via an inverter (N1 or N2) to the clock inputs of the first or second storage element (FF1 or FF2) triggered with the positive clock edge and thus the switching-over device (US) is selectively adapted for interpreting the falling clock signal edges.

6. Switching-over device according to Claim 3 for selectively switching through a plurality of clock signal sequences (CLn) on the basis of a decoded selection signal, the in each case similarly configured switching networks (SNn) associated with one of the clock signal sequences (CLn) exhibiting a D-type flip-flop as storage element (FF3n) and the switching device for switching-through the associated clock signal sequence being constructed as AND element (U5n), characterized in that the switching means also provided as hold stage in each switching network is constructed as a further AND element (U4n) which is connected at its input in parallel with the inverse outputs ($\overline{Q}$) of the storage elements of all other switching networks and its output is connected to a reset input (R) of the storage element in the switching network.

7. Switching-over device according to Claim 6, characterized in that each of the further AND elements (U4n) exhibits a further input and these further inputs are jointly connected to a control signal line via which the switching-over device can be supplied with an external reset signal (RES).

8. Switching-over device according to Claim 6 or 7, characterized in that in each switching network (SNn) an inverter (N3) is provided which is supplied at the input with the associated clock signal sequence (CLn) and which is connected at the output to the clock input of the corresponding storage element (FF3n) which is triggered with the positive edge.

9. Switching-over device according to one of Claims 6 to 8, characterized by an n-of-m decoder (DEC) which is supplied at the input with a digital selection signal (AW1, AW2) and the outputs of which are in each case connected to one of the switching networks (SNn).

## Revendications

1. Procédé pour réaliser la commutation retardée d'un dispositif (DEV) commandé de façon cadencée, comportant au moins deux états de fonctionnement, qui sont commandés par respectivement une suite individuelle de signaux de cadence (CL1, CL2) et sont sélectionnés par un signal statique de sélection (AW), et selon lequel après un changement d'état du signal de sélection (AW), qui déclenche la commutation, tout d'abord une suite de signaux de cadence (par exemple CL1), sélectionnées jusqu'alors, continue à être transmise, sans modification, au dispositif (DEV) commandé de façon cadencée, jusqu'à l'apparition du flanc immédiatement suivant d'une impulsion dans un sens prédéterminé, puis l'état du signal de cadence, apparu de ce fait, est maintenu indépendamment de modifications possibles de l'état de la suite (CL1) de signaux de cadence, sélectionnée jusqu'alors, caractérisé par le fait que cet état du signal de cadence n'est cependant maintenu que jusqu'à ce que le flanc immédiatement suivant d'une impulsion, possédant le même sens prédéterminé, apparaisse dans la suite de signaux de cadence (par exemple CL2) associée à l'état de fonctionnement devant être activé, et que ceci déclenche la transmission directe de cette autre suite de signaux de cadence (CL2) au dispositif (DEV) commandé de façon cadencée.

2. Procédé suivant la revendication 1, selon lequel pour transmettre une suite de signaux de cadence (par exemple CL1) nouvellement sélectionnée au dispositif (DEV) commandé de façon cadencée, l'état, qui provoque le déclenchement, du signal de sélection (AW) est transféré dans une première mémoire (FF1 ou FF31), d'une manière commandée par le flanc d'impulsion, possédant le sens prédéterminé, de la suite de signaux de cadence nouvellement sélectionnée, et un signal de commande (A1 ou Q1) est produit en fonction de l'état, atteint de ce fait, de la première mémoire, signal de commande qui active un dispositif de commutation (U1 ou U51), qui reçoit la suite de signaux de cadence nouvellement sélectionnée, et dans le cas d'une nouvelle modification du signal de sélection, la mémoire est tout d'abord déchargée lors de l'apparition du flanc d'une impulsion, possédant le sens prédéterminé, de la suite de signaux de cadence sélectionnée jusqu'alors, et par conséquent le dispositif de commutation, activé jusqu'alors, est désactivé, caractérisé par le fait que simultanément lors de la décharge de la mémoire du dispositif de commutation activé jusqu'alors, une autre mémoire (FF2 ou FF32), associée à la suite de signaux de cadence (par exemple CL2), qui est maintenant sélectionnée, est préparée et chargée lors de l'apparition du flanc d'une impulsion, possédant le sens prédéterminé, de la suite de signaux de cadence maintenant sélectionnée, et que ceci entraîne l'activation d'un autre dispositif de commutation (U2 ou U52), qui, de façon analogue, transmet directement la suite de signaux de cadence, qui est maintenant sélectionnée, au dispositif (DEV) commandé de façon cadencée.

3. Dispositif de commutation pour commuter un dispositif (DEV) commandé de façon cadencée, comportant au moins deux états de fonctionnement commandés par respectivement une suite individuelle de signaux de cadence (par exemple CL1) et sélectionnés par un signal de sélection (par exemple AW1), et dans lequel pour chacun de ces états de fonctionnement, il est prévu respectivement un réseau de commutation (par exemple N1, FF1, U1 ou SNn) comportant un circuit de mémoire (FF1 ou FF3n) commandé par la suite associée de signaux de cadence (par exemple CL1) et mémorisant l'état du signal de sélection, et un dispositif de commutation (U1 ou U5n) raccordé à ce circuit et servant à transmettre de façon sélective la suite associée de signaux de cadence, et en outre un circuit ou (O1 ou

O2), au moyen duquel les réseaux de commutation sont raccordés au dispositif (DEV) commandé de façon cadencée, caractérisé par le fait que dans les réseaux de commutation, il est prévu respectivement d'autres moyens de commutation (par exemple U3 ou U4n), qui sont réalisés en tant qu'étages de maintien, de telle sorte que, lors d'un processus de commutation, ils empêchent un transfert, commandé par l'apparition du flanc immédiatement suivant, d'une impulsion, possédant un sens prédéterminé, de la suite maintenant sélectionnée des signaux de cadence (CL1, CL2), du signal de sélection maintenant activé, dans le circuit de mémoire uniquement jusqu'à ce que le circuit de mémoire du réseau de commutation sélectionné jusqu'alors soit désactivé.

4. Dispositif de commutation suivant la revendication 3 pour transmettre de façon sélective l'une de deux suites de signaux de cadence (CL1 ou CL2) sur la base d'un signal statique de sélection (AW), qui prend respectivement l'un de deux états, et dans lequel les circuits de mémoire (FF1 ou FF2) sont réalisés sous la forme de bascules bistables de type D, aux entrées de cadence desquelles est envoyée respectivement l'une des deux suites de signaux de cadence (CL1 ou CL2), et les dispositifs de commutation sont réalisés sous la forme de circuits ET (U1 ou U2), à une entrée desquels est envoyée la suite respectivement associée de signaux de cadence (CL1, CL2), caractérisé par le fait que la sortie inverse du premier circuit de mémoire (FF1) ou la sortie normale du second circuit de mémoire (FF2) est reliée à la seconde entrée du dispositif correspondant de commutation (U1 ou U2), que les moyens de commutation réalisés sous la forme d'étages de maintien incluent un autre circuit ET (U3), qui est raccordé à la sortie normale du premier circuit de mémoire (FF1) et est relié, côté sortie, à l'entrée de données du second circuit de mémoire (FF2), ainsi qu'un conducteur de liaison, au moyen duquel le premier circuit de mémoire (FF1) est maintenu dans l'état positionné, par l'un des signaux de sortie $(\overline{A2})$ du second circuit de mémoire (FF2), tant que le second circuit de mémoire est lui-même positionné, et que le signal de sélection (AW) est envoyé en parallèle à l'entrée de données du premier circuit de mémoire (FF1) et à une autre entrée de l'autre circuit ET (3).

5. Dispositif de commutation suivant la revendication 4, caractérisé par le fait que les deux suites de signaux de cadence (CL1 ou CL2) sont raccordées respectivement par l'intermédiaire d'un inverseur (N1 ou N2) aux entrées de cadence du premier ou du second circuit de mémoire (FF1 ou FF2) déclenché par des flancs positifs d'impulsions de cadence et que, par conséquent, le circuit de commutation (US) est accordé de façon sélective sur une évaluation des flancs retombants des signaux de cadence.

6. Dispositif de commutation suivant la revendication 3 pour réaliser la transmission sélective d'une multiplicité de suites de signaux de cadence (CLn) sur la base d'un signal décodé de sélection, les réseaux de commutation (SNn), qui possèdent respectivement la même constitution et sont associés à l'une des suites de signaux de cadence (CLn), possèdent comme circuit de mémoire (FF3n) une bascule bistable de type D, et le dispositif de commutation servant à transmettre la suite associée de signaux de cadence est réalisé sous la forme d'un circuit ET (U5n), caractérisé par le fait que les moyens de commutation prévus par ailleurs dans chaque réseau de commutation en tant qu'étage de maintien, sont réalisés sous la forme d'un autre circuit ET (U4n), qui, côté entrée, est raccordé en parallèle aux sorties inverseuses $(\overline{Q})$ des circuits de mémoire de tous les autres réseaux de commutation et dont la sortie est raccordée à une entrée de remise à l'état initial (R) du circuit de mémoire dans le réseau de commutation.

7. Dispositif de commutation suivant la revendication 6, caractérisé par le fait que chacun des autres circuits ET (U4n) possède une autre entrée, et que ces autres entrées sont raccordées en commun à une ligne de transmission de signaux de commande, au moyen de laquelle un signal extérieur de remise à l'état initial (RS) peut être envoyé au dispositif de commutation.

8. Dispositif de commutation suivant la revendication 6 ou 7, caractérisé par le fait que dans chaque réseau de commutation (SNn) est prévu un inverseur (23), à l'entrée duquel est envoyé la suite associée de signaux de cadence (CLn) et dont la sortie est raccordée à l'entrée de cadence du circuit de mémoire correspondant (FF3n), qui est déclenché par le flanc positif.

9. Dispositif de commutation suivant l'une des revendications 6 à 8, caractérisé par un décodeur n-parmi-m (DEC), à l'entrée duquel est envoyé un signal numérique de sélection (AW1, AW2) et dont les sorties sont reliées respectivement à l'un des réseaux de commutation (SNn).

# FIG 1

# FIG 2

# FIG 3

FIG 4